# DEMANDE DE BREVET EUROPEEN

(11) **EP 1 074 774 A1**
(43) Date de publication de la demande: **07.02.2001**
(21) Numéro de dépôt: 00401928.7
(22) Date de dépôt: 05.07.2000
(51) Int. Cl.: F16L 3/24, F16L 41/02, F16L 41/16

(54) **Module fluidique**

(30) Priorité: 05.08.1999 FR 9910193
(71) Demandeur: LEGRIS S.A., F-35000 Rennes (FR)
(72) Inventeur: Legeai, Patrick, 35133 Javene (FR)
(74) Mandataire: Robert, Jean-Pierre

(57) **Abrégé**

Module fluidique, comprenant une plaque support (8) ayant deux bords opposés parallèles et au moins un corps (14, 24) fixé sur la plaque support, le corps comportant un canal principal (15, 25) s'étendant de façon sensiblement parallèle à la plaque support (8) et ayant des première et seconde extrémités pourvues respectivement d'un raccord instantané (16) et d'un embout de connexion (17) à un tel raccord instantané, le raccord instantané et l'embout de connexion s'étendant parallèlement audits bords opposés (9) de la plaque support (8) et l'un au moins du raccord instantané et de l'embout de connexion s'étendant au moins partiellement au-delà de la plaque support.

## Description

La présente invention concerne un module fluidique utilisable notamment pour former des ensembles de distribution d'un fluide et plus particulièrement des ensembles de distribution d'air comprimé.

Il est connu de réaliser des ensembles de distribution pneumatiques monoblocs réalisés directement en usine en raccordant dans un boîtier des éléments pneumatiques fonctionnels (tels que des vannes, des manomètres, des bornes de sortie...) les uns aux autres. L'assemblage est effectué soit selon des configurations spécifiques aux besoins du client, ces ensembles sont réalisés à l'unité et ont donc un coût relativement élevé, soit selon des configurations prédéterminées pour former des ensembles standards, de tels ensembles peuvent être réalisés en série et sont de ce fait moins coûteux mais ne satisfont pas toujours les besoins du client.

Il serait donc intéressant de disposer d'éléments fluidiques fonctionnels qui peuvent être agencés pour former des ensembles de distribution adaptables de façon simple par construction modulaire.

A cet effet, on prévoit, selon l'invention, un module fluidique comprenant une plaque support ayant deux bords opposés parallèles et au moins un corps fixé sur la plaque support, le corps comportant un canal principal s'étendant de façon sensiblement parallèle à la plaque support et ayant des première et seconde extrémités pourvues respectivement d'un raccord instantané et d'un embout de connexion à un tel raccord instantané, le raccord instantané et l'embout de connexion s'étendant parallèlement audits bords opposés de la plaque support et l'un au moins du raccord instantané et de l'embout de connexion s'étendant au moins partiellement au-delà de la plaque support.

Ainsi, les modules fluidiques peuvent être montés sur un châssis, comme un profilé, en alignement les uns par rapport aux autres par l'intermédiaire des bords opposés parallèles de leur plaque support et être raccordés les uns aux autres par simple emboîtement de l'embout de connexion des uns dans le raccord instantané des autres sans nécessiter une intervention directe sur les moyens de raccordement et sans recourir à un outillage particulier. Les modules fluidiques sont avantageusement montés de manière que les bords opposés parallèles de leur plaque support coopèrent avec le profilé pour coulisser selon une direction longitudinale de celui-ci. Les modules sont ainsi accolés par coulissement, leur raccordement se faisant automatiquement.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue partielle en coupe longitudinale d'un ensemble de distribution réalisé à partir de modules fluidiques conformes à un premier mode de réalisation de l'invention,
- la figure 2 est une vue agrandie partielle de la figure 1,
- la figure 3 est une vue en perspective d'un module fluidique mis en place dans l'ensemble de distribution de la figure 1,
- la figure 4 est une vue schématique partielle en coupe transversale de l'ensemble de distribution de la figure 1 montrant plus particulièrement le mode de fixation des modules,
- la figure 5 est un vue analogue à la figure 4 d'un ensemble de distribution réalisé à partir de modules fluidiques conformes à un deuxième mode de réalisation.

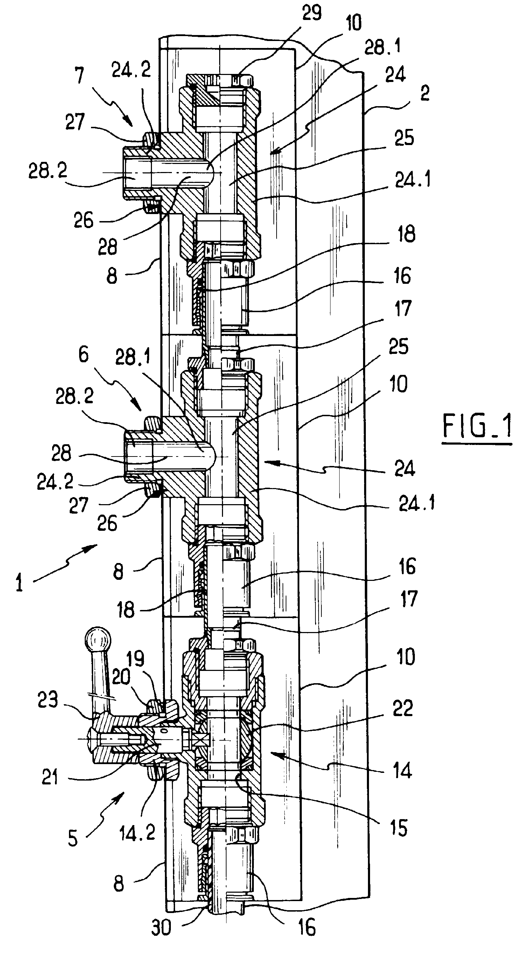

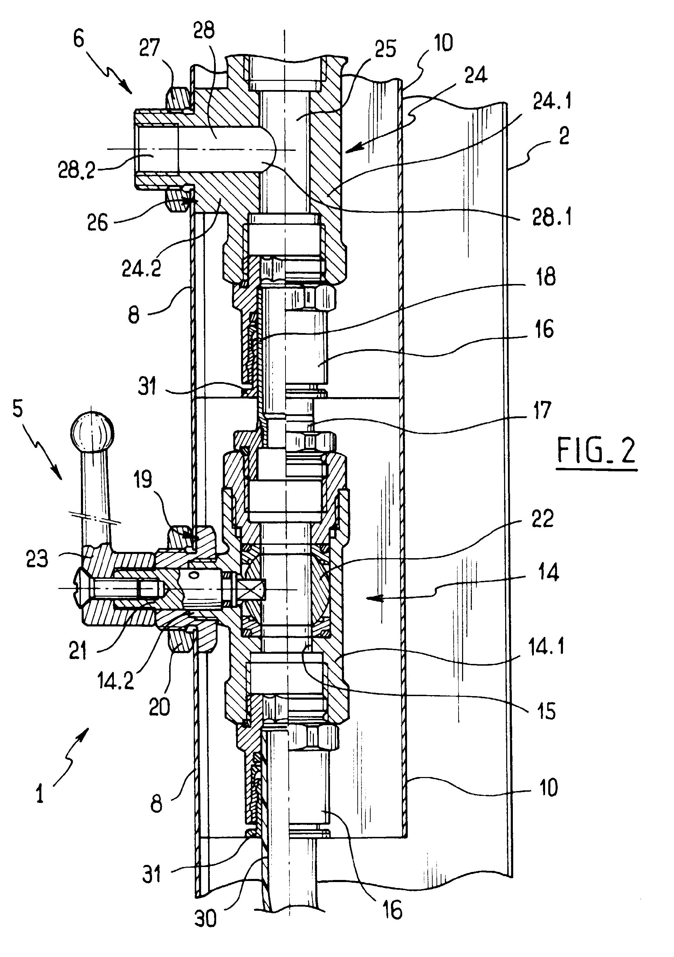

Aux figures 1 à 4, est représenté un ensemble de distribution généralement désigné en 1 qui comprend un profilé 2 à section transversale en C formant une goulotte destiné à être fixé sur un support tel qu'un élément de mobilier ou un mur. Le profilé 2 comprend des ailes longitudinales 3 définissant entre elles une fente et ayant des bords libres 4 en forme de glissières orientées l'une vers l'autre. Le profilé 2 est réalisé en un métal tel que l'aluminium ou en matière plastique.

L'ensemble de distribution 1 comprend ici un module de vanne, un module de dérivation et un module de terminaison, désignés respectivement par les références générales 5, 6, 7, fixés de façon amovible au profilé 2.

Chaque module 5, 6, 7 comprend une plaque support 8 rectangulaire ayant deux bords opposés parallèles en forme de glissière 9 orientée vers l'extérieur de la plaque support 8.

Chaque module 5, 6, 7 comprend également une goulotte 10, à section transversale en U et de même longueur que la plaque support 8, formant un boîtier et ayant deux bords longitudinaux libres 11 le long de chacun desquels courent d'une part, à l'intérieur de la goulotte 10, une aile 12 reçue dans la glissière 9 correspondante de la plaque support 8 et, d'autre part, à l'extérieur de la goulotte 10, une aile 13 reçue dans la glissière 4 correspondante du profilé 2.

Le module de vanne 5 comprend un corps 14 comportant une partie longitudinale tubulaire 14.1 définissant un canal principal 15 qui s'étend parallèlement à la plaque support 8 et qui possède une extrémité dans laquelle est vissé un raccord instantané 16 de type connu et une extrémité opposée dans laquelle est vissé un embout de connexion 17. Le raccord instantané 16 et l'embout de connexion 17 s'étendent dans le prolongement l'un de l'autre parallèlement aux bords opposés 9 de la plaque 8. L'extrémité libre du raccord instantané 16 affleure ici l'extrémité de la plaque support mais peut s'étendre au-delà de celle-ci. L'embout de connexion 17 possède un portion d'extrémité libre 18 qui s'étend au-delà de la plaque support 8 pour être engagée dans un raccord instantané identique au raccord instantané 16.

Le corps 14 comprend une partie transversale 14.2 filetée s'étendant perpendiculairement à la partie longitudinale 14.1 et traversant la plaque support 8. La partie transversale 14.2 comprend un épaulement 19 adjacent à la partie longitudinale 14.1 du corps 14 et contre lequel la plaque support 8 est appliquée par un écrou 20 engagé sur la partie transversale 14.2 d'un côté de la plaque support 8 opposé à l'épaulement 19 et à la partie longitudinale 14.1.

La partie transversale 14.2 est tubulaire et forme un logement pour une tige de manoeuvre 21 ayant une extrémité solidaire d'un élément 22 d'obturation du canal principal 15 et une extrémité opposée en saillie de la partie transversale 14.2 et sur laquelle est fixée de façon amovible une manette 23.

Le module de dérivation 6 comprend un corps 24 comportant une partie longitudinale tubulaire 24.1 définissant un canal principal 25 qui s'étend parallèlement à la plaque support 8 et qui possède une extrémité dans laquelle est vissé un raccord instantané 16 et une extrémité opposée dans laquelle est vissé un embout de connexion 17. Comme dans le module de vanne 5, le raccord instantané 16 et l'embout de connexion 17, identiques à ceux du module de vanne 5, s'étendent dans le prolongement l'un de l'autre parallèlement aux bords opposés 9 de la plaque 8 et l'embout de connexion 17 possède une portion d'extrémité libre 18 qui s'étend en saillie de la plaque support 8.

Le corps 24 comprend une partie transversale 24.2 filetée s'étendant perpendiculairement à la partie longitudinale 24.1 et traversant la plaque support 8. La partie transversale 24.2 comprend un épaulement 26 adjacent à la partie longitudinale 24.1 du corps 24 et maintenu appliqué contre la plaque support 8 par un écrou 27 engagé sur la partie transversale 24.2 d'un côté de la plaque support 8 opposé l'épaulement 26 et à la partie longitudinale 24.1.

La partie transversale 14.2 est tubulaire et forme un canal dérivé 28 ayant une extrémité 28.1 débouchant dans le canal principal 25 et une extrémité opposée 28.2 qui débouche du côté de plaque support 8 opposé à la partie longitudinale 24.1 et qui est taraudée pour être raccordée à un élément non représenté tel qu'un manomètre ou un appareil pneumatique.

Le module de terminaison 7 est identique au module de dérivation 6 sauf en ce qui concerne l'embout de connexion 17 qui est remplacé par un bouchon 29.

Le montage des modules dans le profilé 2, fixé ici verticalement sur un support, débute, pour la configuration représentée, par la mise en place du module de vanne 5 dans le profilé 2. Les ailes extérieures 13 de la goulotte 10 sont introduites successivement dans les glissières 4 du profilé 2 en écartant légèrement celles-ci l'une de l'autre, ce qui est permis par l'élasticité du profilé 2, de manière que le raccord instantané 16 soit orienté vers une conduite 30 d'alimentation en air comprimé représentée aux figures en bas du profilé 2. Le module de vanne 5 est ensuite déplacé par coulissement dans les glissières 4 jusqu'à connecter le raccord instantané 16 sur la conduite 30 d'alimentation en air comprimé et à venir en butée par exemple d'un module électrique ou d'une plaque d'obturation de la fente du profilé 2 préalablement mis en place sur le profilé 2.

Les modules de dérivation et de terminaison 6, 7 sont successivement mis en place sur le profilé 2 de la même façon.

Le module de dérivation 6 est coulissé dans les glissières 4 jusqu'à ce que les extrémités inférieures de la plaque 8 et de la goulotte 10 de ce module viennent en appui des extrémités supérieures de la plaque 8 et de la goulotte 10 du module de vanne 5, la connexion de l'embout de connexion 17 du module de vanne 5 avec le raccord instantané 16 du module de dérivation 6 se faisant automatiquement. On remarquera à ce propos que la longueur de la portion d'extrémité libre 18 de l'embout de connexion 17 en saillie de la plaque support 8 est déterminée de manière que lorsque deux modules ont leur plaque 8 et leur goulotte 10 en contact, la portion d'extrémité libre 18 de l'embout de connexion 17 d'un des modules soit suffisamment engagée dans le raccord instantané 16 de l'autre module pour assurer un raccordement étanche des deux modules.

Il est procédé de la même façon pour le module de terminaison 7 destiné à être raccordé au module de dérivation 6.

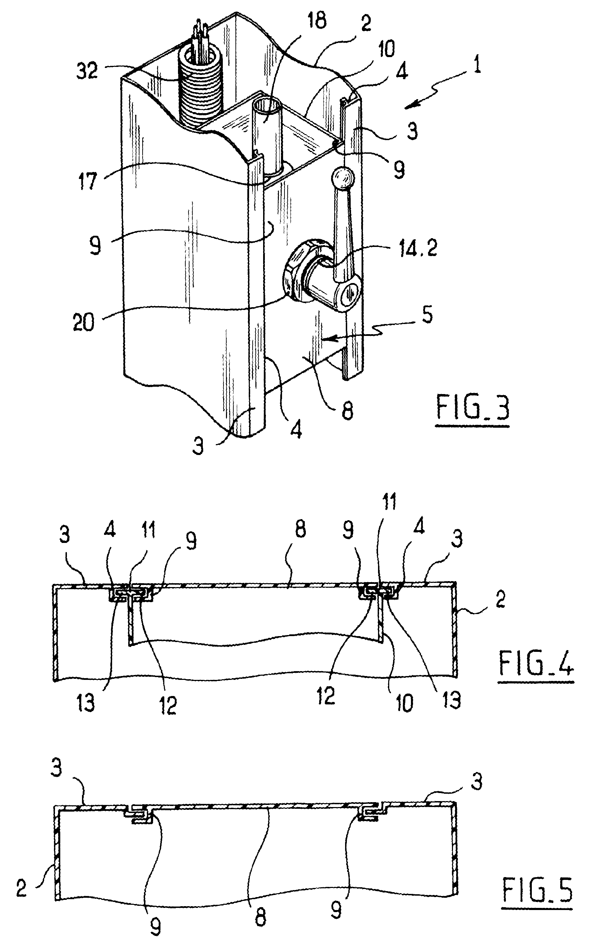

On notera plus particulièrement à la figure 3 que l'espace existant entre la goulotte 10 des modules 5, 6, 7 et le profilé 2 est suffisant pour permettre le passage de câbles électriques tels que celui référencé 32. Des modules pneumatiques et des modules électriques peuvent donc être disposés sur un même profilé 2, ce qui réduit l'encombrement de façon avantageuse par rapport à l'art antérieur dans lequel les ensembles de distribution électriques et pneumatiques sont séparés et juxtaposés.

Le démontage d'un ou plusieurs modules est réalisé en retirant l'écrou de fixation à la plaque support 8 (ce qui suppose dans le cas du module de vanne 5 le retrait préalable de la manette 23) puis en déboîtant la plaque support 8 des glissières 4 du profilé 2. Le poussoir de déverrouillage 31 du raccord instantané 16 du ou des modules en question est alors accessible de sorte que par enfoncement du poussoir de déverrouillage et coulissement relatif desdits modules dans les glissières 4 du profilé 1, il est possible de procéder à une déconnexion des modules.

En variante, telle que représentée à la figure 5, les modules ne comportent pas de goulotte formant boîtier. Les ailes 3 du profilé 1 sont alors directement engagées dans les glissières 9 de la plaque support 8.

Bien entendu, l'invention n'est pas limitée au mode de réalisation décrit et on peut y apporter des variantes de réalisation sans sortir du cadre de l'invention tel que défini par les revendications.

En particulier, l'invention n'est pas limitée aux modules de vanne ou de dérivation mais est applicable à des composants exerçant d'autres fonctions. Des modules de régulation de débit ou de pression, d'arrêt d'urgence... peuvent également être réalisés. L'invention n'est en outre pas limitée aux ensembles de distribution pneumatique.

Par ailleurs, les modules peuvent être montés directement sur des supports tels que des éléments de mobilier.

## Revendications

1. Module fluidique, caractérisé en ce qu'il comprend une plaque support (8) ayant deux bords opposés parallèles (9) et au moins un corps (14, 24) fixé sur la plaque support, le corps comportant un canal principal (15, 25) s'étendant de façon sensiblement parallèle à la plaque support (8) et ayant des première et seconde extrémités pourvues respectivement d'un raccord instantané (16) et d'un embout de connexion (17) à un tel raccord instantané, le raccord instantané et l'embout de connexion s'étendant parallèlement audits bords opposés (9) de la plaque support (8) et l'un au moins du raccord instantané et de l'embout de connexion s'étendant au moins partiellement au-delà de la plaque support.

2. Module fluidique selon la revendication 1, caractérisé en ce que lesdits bords opposés (9) de la plaque support (8) sont pourvus de moyens pour former une liaison glissière avec des bords longitudinaux libres (11) d'une première goulotte (10).

3. Module fluidique selon la revendication 2, caractérisé en ce que chacun desdits bords opposés (9) de la plaque support (8) forme une glissière orientée vers l'extérieur de la plaque support pour recevoir une aile intérieure (12) courant le long du bord longitudinal libre correspondant (11) de la première goulotte (10) à l'intérieur de celle-ci.

4. Module fluidique selon la revendication 3, caractérisé en ce que chaque bord longitudinal libre (11) de la première goulotte (10) comprend une aile extérieure (13) courant le long du bord longitudinal libre (11) à l'extérieur de la première goulotte pour être reçue dans une glissière (1) solidaire d'un bord longitudinal libre (3) correspondant d'une deuxième goulotte (2).

5. Module fluidique selon l'une quelconque des revendications précédentes, caractérisé en ce qu'il comprend des moyens amovibles de fixation (20, 27) du corps (14, 24) sur la plaque support (8) disposés d'un côté de la plaque support opposée au corps.

6. Module fluidique selon la revendication 5, caractérisé en ce que le corps (14, 24) comprend une partie transversale filetée (14.2, 24.2) s'étendant perpendiculairement au canal principal (15, 25) pour traverser la plaque support (8), les moyens amovibles de fixation comprenant un écrou (20, 27) engagé sur la partie transversale (14.2, 24.2) pour serrer la plaque support (8) contre un épaulement (19, 26) de la partie transversale.

7. Module fluidique selon l'une quelconque des revendications précédentes, caractérisé en ce qu'il comprend un organe de manoeuvre (23, 21) monté sur la partie transversale (14.2) du corps (14) et relié à un élément (22) d'obturation du canal principal (15).

8. Module fluidique selon l'une quelconque des revendications 1 à 6, caractérisé en ce que la partie transversale (24.2) du corps (24) est tubulaire et délimite un canal dérivé (28) débouchant dans le canal principal (25).
